# EUROPÄISCHE PATENTANMELDUNG

(11) **EP 4 027 245 A1**
(43) Veröffentlichungstag der Anmeldung: **13.07.2022**
(21) Anmeldenummer: 21204716.1
(22) Anmeldetag: 26.10.2021
(51) Int. Cl.: G06F 11/36

(54) **COMPUTERIMPLEMENTIERTES VERFAHREN ZUR BESTIMMUNG VON ÄHNLICHKEITSWERTEN VON VERKEHRSSZENARIEN**

(30) Priorität: 12.01.2021 DE 102021100395
(71) Anmelder: dSPACE GmbH, 33102 Paderborn (DE)
(72) Erfinder: Püschl, Thorsten, 33102 Paderborn (DE); Rossi, Andre, 33102 Paderborn (DE)

(57) **Zusammenfassung**

Computerimplementiertes Verfahren zur Bestimmung von Ähnlichkeitswerte von Verkehrsszenarien durch Ermittlung von Bewegungsprofilen von Verkehrsteilnehmern in den Verkehrsszenarien, mit den Schritten:
- Erstellung von zumindest einem Bewegungsprofils eines Verkehrsteilnehmers mit zumindest einem der Bewegungselemente
• laterale Bewegung,
• longitudinale Bewegung,
• Positions- und / oder Distanzparameter,
wobei bei jeder Änderung des zumindest einen Bewegungselementes ein neues Segment im Bewegungsprofil beginnt;
- Erstellung einer Sequenz des zumindest einen Bewegungsprofils für das Egofahrzeug und / oder eines Fellow-Fahrzeugs des Verkehrsszenarios, wobei bei einer Änderung eines Segments für das zumindest eine verwendete Bewegungselement eine Sequenzänderung erzeugt wird;
-Ermitteln eines Ähnlichkeitsmaß anhand von Bewegungsprofilen aus zumindest zwei Verkehrsszenarien durch Vergleich der aus den Bewegungsprofilen erstellten Sequenzen;
- Bereitstellen des Ähnlichkeitsmaß.

## Beschreibung

Die vorliegende Erfindung betrifft ein computerimplementiertes Verfahren zur Bestimmung von Ähnlichkeitswerten von Verkehrsszenarien durch Ermittlung von Bewegungsprofilen von Verkehrsteilnehmern in den Verkehrsszenarien.

Die vorliegende Erfindung betrifft des Weiteren eine Testeinheit zur Bestimmung von Ähnlichkeitswerten von Verkehrsszenarien. Die vorliegende Erfindung betrifft darüber hinaus ein Computerprogramm und einen computerlesbaren Datenträger.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Der Aufwand, insbesondere der Zeit- und/oder Kostenaufwand, zum Testen derartiger Fahrzeugfunktionen unter Verwendung der oben genannten Überprüfungsmethoden ist dabei typischerweise sehr hoch, da eine große Anzahl potenziell möglicher Fahrsituationen getestet werden muss.

Ein zumindest teilweise autonomes Verkehrsmittel ausschließlich auf der Straße mit Fahrtstrecken über Milliarden Kilometer zu testen ist aus Zeit- und Kostengründen nicht möglich. Zudem würden viele redundante Testkilometer entstehen, während kritische und ungewöhnliche Situationen, die aber relevant für die Fähigkeiten des zumindest teilweise autonomen Fahrzeugs sind, nicht auftreten.

Dies kann insbesondere zu einem hohen Aufwand für Testfahrten als auch für Simulationen führen. DE 10 2017 200 180 A1 gibt ein Verfahren zur Verifizierung und/oder Validierung einer Fahrzeugfunktion an, welche dafür vorgesehen ist, ein Fahrzeug in Längs- und/oder Querrichtung autonom zu führen.

Das Verfahren umfasst ein Ermitteln, auf Basis von Umfelddaten bezüglich eines Umfelds des Fahrzeugs, einer Test-Steueranweisung der Fahrzeugfunktion an einen Aktuator des Fahrzeugs, wobei die Test-Steueranweisung nicht durch den Aktuator umgesetzt wird.

Das Verfahren umfasst des Weiteren ein Simulieren, auf Basis von Umfelddaten und unter Verwendung eines Verkehrsteilnehmer-Modells bezüglich zumindest eines Verkehrsteilnehmers im Umfeld des Fahrzeugs, einer fiktiven Verkehrssituation, die vorliegen würde, wenn die Test-Steueranweisung umgesetzt worden wäre.

Das Verfahren umfasst ferner ein Bereitstellen von Testdaten in Bezug auf die fiktive Verkehrssituation. Die Fahrzeugfunktion wird hierbei zum Ermitteln der Test-Steueranweisung passiv im Fahrzeug betrieben.

Nachteilhaft an diesem Verfahren ist, dass zur Verifizierung und/oder Validierung der Fahrzeugfunktion ein tatsächlicher Betrieb des Fahrzeugs zum Ermitteln der benötigten Daten erforderlich ist.

Die Hersteller von zumindest teilweise autonomen Verkehrsmitteln benötigen eine parallelisierte, simulationsbasierte Lösung. Die Testmethode "Szenario basiertes Testen" setzt hier an. Aber auch hier benötigt jedes zu testende Szenario Zeit und damit Kosten. Die Hersteller von zumindest teilweise autonomen Verkehrsmitteln besitzen Datenbanken mit Tausenden von Szenarien, in denen sich im Laufe der Zeit Duplikate oder sehr ähnliche Szenarien häufen. Zudem werden durch Testfahrten auch stetig neue Daten zur Generierung weiterer Szenarien gesammelt, wobei nicht sofort entscheidbar ist, ob bereits vergleichbare Szenarien in einer Datenbank abgelegt sind. Selbst bei einer massiven Parallelisierung ist das Testen aller Szenarien zu zeitaufwändig.

Demzufolge besteht der Bedarf in einer vorteilhaften Ausgestaltung der Erfindung ähnliche Szenarien zu identifizieren, um folgerichtig zu testende Szenarien zu bestimmen und / oder anhand der durch Testfahrten gesammelten Rohdaten zu entscheiden, welche Szenarien generiert werden sollen. Rohdaten können dabei alle Daten wie Kamera-, Lidar- aber auch Radardaten, aber auch GPS-Informationen umfassen.

Es ist daher Aufgabe der Erfindung, ein Verfahren, eine Testeinheit, ein Computerprogramm und einen computerlesbaren Datenträger anzugeben, welches Ähnlichkeiten von Szenarien im Rahmen eines Szenario-basierten Testens für Systeme und Systemkomponenten im hochautomatisierten Fahren in effizienter Weise ermitteln kann.

### Offenbarung der Erfindung

Die Aufgabe wird erfindungsgemäß gelöst durch ein computerimplementiertes Verfahren zur Bestimmung von Ähnlichkeitswerten von Verkehrsszenarien durch Ermittlung von Bewegungsprofilen von Verkehrsteilnehmern in den Verkehrsszenarien nach Patentanspruch 1, eine Testeinheit nach Patentanspruch 10, ein Computerprogramm nach Patentanspruch 12 und einen computerlesbaren Datenträger nach Patentanspruch 13.

Beim Szenario-basierten Testen von Systemen und Systemkomponenten zur autonomen Führung eines Kraftfahrzeugs werden Szenarien definiert, welche als Abstraktion einer Verkehrssituation bezeichnet werden können. Für jedes Szenario können dann wiederum Testfälle ausgeführt werden. Ein logisches Szenario ist hierbei die Abstraktion einer Verkehrssituation mit der Straße, dem Fahrverhalten und dem umliegenden Verkehr ohne konkrete Parameterwerte festzulegen. Durch die Wahl konkreter Parameterwerte wird aus dem logischen Szenario ein konkretes Szenario. Ein solches konkretes Szenario entspricht einer jeweils einzelnen Verkehrssituation.

Ein Szenario beschreibt dabei die zeitliche Entwicklung von Szenen, welche mit einer Startszene beginnen. Im Gegensatz zu Szenen decken Szenarien eine gewisse Zeitspanne ab. Eine einzelne Szene kann als eine Momentaufnahme des Umfelds angesehen werden, welche die Szenerie, dynamische Elemente und alle Akteure umfasst. Die Akteure und insbesondere die Fahrzeuge einer Szene.

Zur grundsätzlichen erfindungsgemäßen Unterscheidung der Verkehrsszenarien bzw. Szenarien werden die Bewegungen der Verkehrsteilnehmer betrachtet. Damit werden zur Unterscheidung nicht statische Parameter, wie Umfeld, Bebauung oder Fahrbahnbreite herangezogen, sondern insbesondere das Fahrverhalten der einzelnen Verkehrsteilnehmer. Die Bewegungen der Verkehrsteilnehmer und damit das Fahrverhalten wird durch Trajektorien beschrieben. Trajektorien beschreiben einen Pfad sowohl in räumlicher als auch in zeitlicher Richtung. Durch die Beschreibung der Bewegungen / Trajektorien eines Verkehrsteilnehmers kann ein Bewegungsprofil erstellt werden.

Die Ähnlichkeit zwischen zwei Szenarien wird erfindungsgemäß anhand der Bewegungsprofile der Verkehrsteilnehmer bewertet.

Eine autonome Fahrfunktion ist durch ein System, beispielsweise ein Steuergerät, realisiert. Das Steuergerät wird herkömmlicherweise im realen Fahrzeug in realen Verkehrssituationen getestet, durch Hardware-in-the-loop Tests oder alternativ durch vollständig virtuelle Tests validiert.

Unter Verwendung des vorliegenden Verfahrens kann beispielsweise ein sogenanntes Cut-In-Szenario von anderen Szenarien unterschieden werden. Das Cut-In-Szenario kann als Verkehrssituation bezeichnet werden, bei welcher ein hochautomatisiertes bzw. autonomes Fahrzeug in einer vorgegebenen Fahrspur fährt und ein anderes Fahrzeug mit gegenüber dem Ego-Fahrzeug verringerter Geschwindigkeit von einer weiteren Fahrspur in die Fahrspur des Ego-Fahrzeugs in einem bestimmten Abstand einschert. Das Ego-Fahrzeug bezeichnet hier das zu testende Fahrzeug.

Die Geschwindigkeit des Ego-Fahrzeugs und des weiteren Fahrzeugs, welches auch als Fellow-Fahrzeug bezeichnet wird, ist dabei konstant. Da die Geschwindigkeit des Ego-Fahrzeugs höher ist als die des Fellows, muss das Ego-Fahrzeug abgebremst werden, um eine Kollision der beiden Fahrzeuge zu vermeiden. Aber auch ein Cut-in-Szenario kann in verschiedenen Ausprägungsformen vorliegen, wie z.B. durch eine Unterscheidung in der Geschwindigkeit der Verkehrsteilnehmer.

Des Weiteren ist ein Szenario möglich, indem das Ego-Fahrzeug das überholende Fahrzeug darstellt, so dass das Ego-Fahrzeug in einer vorgegebenen Fahrspur fährt und ein anderes Fahrzeug mit gegenüber dem Ego-Fahrzeug verringerter Geschwindigkeit überholt. Dabei wechselt/scherrt das Ego-Fahrzeugt auf eine weitere Fahrspur aus und fährt mit höherer Geschwindigkeit an dem Fellow-Fahrzeug vorbei. Die Geschwindigkeit des Ego-Fahrzeug muss in diesem Szenario nicht konstant sein. Nachdem das Ego-Fahrzeug an dem Fellow-Fahrzeug vorbeigefahren ist, scherrt das Ego-Fahrzeug wieder auf die vorherige Fahrspur ein.

Die gemäß des Verfahrens identifizierten Ähnlichkeitswerte oder auch eines Ähnlichkeitsmaß von Szenarien, ermöglicht in vorteilhafter Weise im Rahmen von virtuellen Tests des Steuergeräts unterschiedliche Szenarien für die Validierung zu wählen und/oder die Rohdaten zu identifizieren, die zur Generierung von möglichst abweichenden Szenarien genutzt werden können. So kann durch das erfindungsgemäße Verfahren ein effizienteres virtuelles Validieren von Steuergeräten zur autonomen Führung von Verkehrsmitteln ermöglicht werden.

Weitere Ausführungsformen der vorliegenden Erfindung sind Gegenstand der weiteren Unteransprüche und der nachfolgenden Beschreibung unter Bezugnahme auf die Figuren.

Die Testeinheit umfasst Mittel zum Bereitstellen eines Ähnlichkeitsmaß zu testender Verkehrsszenarien, für Tests einer Vorrichtung zur zumindest teilweisen autonomen Führung eines Verkehrsmittels.

Gemäß einem weiteren Aspekt der Erfindung ist ferner ein Computerprogramm mit Programmcode vorgesehen, um das erfindungsgemäße Verfahren durchzuführen, wenn das Computerprogramm auf einem Computer ausgeführt wird. Gemäß einem weiteren Aspekt der Erfindung ist ein Datenträger mit Programmcode eines Computerprogramms vorgesehen, um das erfindungsgemäße Verfahren durchzuführen, wenn das Computerprogramm auf einem Computer ausgeführt wird.

Die hierin beschriebenen Merkmale des Verfahrens sind zur Identifikation eines Ähnlichkeitsmaß zwischen verschiedenen Szenarien bzw. Fahrsituationen verwendbar. Ebenfalls ist die erfindungsgemäße Testeinheit dazu geeignet, eine Vielzahl unterschiedlicher Vorrichtungen bzw. Steuergeräte von z.B. Automobilen, Nutzfahrzeugen und/oder kommerziellen Fahrzeugen, Schiffen oder Flugzeugen im Sinne einer Durchführung eines Test-Verlaufs auf Basis der Ähnlichkeitswerte einer Vielzahl unterschiedlicher Szenarien bzw. Fahrsituationen zu testen.

Der Fokus bei der Bestimmung der Ähnlichkeit liegt dabei auf den Bewegungsprofilen der Verkehrsteilnehmer des Szenarios. Daher ist die zeitliche Reihenfolge von einzelnen Bewegungselementen eines Bewegungsprofil ein wichtiger Bestandteil bei der Bestimmung der Ähnlichkeit zwischen den Szenarien. Zur Beschreibung des Bewegungsprofils werden erfindungsgemäß vier verschiedene Bewegungselemente vorgeschlagen. Die benannten Bewegungselemente sind naturgemäß nicht abschließend und können im Sinne der Erfindung erweitert werden. Die Bewegungselemente zur Beschreibung eines Bewegungsprofils umfassen zumindest eines der Elemente:
- laterale Bewegung,
- longitudinale Bewegung,
- Positions- und / oder Distanzparameter,

Die laterale Bewegung beschreibt die Bewegung eines Fahrzeugs in lateraler Bewegungsrichtung. Die Manöver "Spurwechsel Links", "Spurwechsel Rechts" und das "Spurhaltungs-Manöver" verursachen unter anderem eine laterale Bewegung. Der Spurwechsel entsteht, wenn z.B. das Ego-Fahrzeug in einer vorgegebenen Fahrspur fährt und dann in der entsprechenden Richtung die Fahrspur verlässt. Bei Spurhaltung wird dementsprechend die Fahrspur von z.B. dem Ego-Fahrzeug gehalten.

Die longitudinale Bewegung beschreibt die Bewegung eines Fahrzeugs in longitudinaler Richtung. Dabei wird die Geschwindigkeit des Fahrzeugs aus einer S-Koordinate berechnet, um die Bewegung in longitudinaler Richtung zu beschreiben. Ausgehend von einer Referenzlinie einer Straße kann das sogenannte SD-Koordinatensystem des Straßensegmentes beschrieben werden. Die S-Koordinate beschreibt den Abstand eines Punktes auf der Straße vom Startpunkt des Segments entlang der Referenzlinie und die D-Koordinate ist definiert als der Abstand in lateraler Richtung von der Referenzlinie. Damit können longitudinale Bewegungen wie konstante Geschwindigkeit und/oder Beschleunigung und/oder Bremsung bestimmt und zum Vergleich herangezogen werden. Die angegebenen Beispiele sind nicht abschließend zu betrachten.

Für den Distanzparameter wird die Distanz, in der sich ein Fellow-Fahrzeug zu dem Ego-Fahrzeug befindet, beschrieben. Es ist dabei z.B. eine Einteilung in drei Klassen möglich, wie z.B. direkten Umgebung zum Ego-Fahrzeugs, mittlere Umgebung zum Ego-Fahrzeugs und weiter entfernt vom EgoFahrzeug. Es sind aber auch andere Einteilungen möglich und entsprechen der Erfindung.

Für den Positionsparameter wird die Position, in der sich ein Fellow-Fahrzeug relativ zum Ego-Fahrzeug befindet, und ebenfalls die Anzahl der Fellow-Fahrzeuge angegeben. Auch hier wird erfindungsgemäß eine Einteilung der Umgebung des Ego-fahrzeugs vorgeschlagen.

Insgesamt wird das Bewegungsprofil eines Fahrzeugs durch die vier benannten Bewegungselemente über den gesamten zeitlichen Verlauf des Szenarios beschrieben. Jedes der Bewegungselemente umfasst dabei ein bis mehrere Segmente, so dass bei Änderung in einem der Bewegungselemente ein neues Segment für das Bewegungselement beginnt. Z.B. kann für das Bewegungselement longitudinale Bewegung erst eine Beschleunigung, dann eine konstante Geschwindigkeit und letztlich eine Bremsung in einem Szenario angenommen werden. Für jede Änderung beginnt erfindungsgemäß ein neues Segment.

Da die Segmentierung des Positions- und Distanzparameters nur für die Fellow-Fahrzeuge relativ zum Ego-Fahrzeug durchgeführt wird, gibt es diese Parameter für das Ego-Fahrzeug nicht. Für den Vergleich der Bewegungsprofile von Ego-Fahrzeugen, sind die Positionen und Distanzen von Fellow-Fahrzeugen wichtig, da durch diese das Verhalten des Ego-Fahrzeugs stark beeinflusst wird.

Aus den Segmenten der einzelnen Bewegungselementen wird dann erfindungsgemäß eine Sequenz über alle Bewegungselemente erstellt. Für jedes Segment in einem Bewegungselement wird ein neuer Sequenzabschnitt in der Sequenz begonnen. Durch die Beschreibung mit einer Sequenz, können die unterschiedlichen, aufeinanderfolgenden und -aufbauenden Bewegungen/Bewegungselemente, die ein Fahrzeug in einem Szenario durchführen kann in ihrer zeitlichen Abfolge beschrieben werden.

Für die Bestimmung der Ähnlichkeit zwischen zwei Szenarien und damit zwischen zwei Sequenzen, die aus den Bewegungsprofilen von zwei Fahrzeugen erstellt worden sind, wird erfindungsgemäß die Berechnung der Edit-Distanz (Normalized Weighted Edit Distance) vorgeschlagen.

So wie die Edit-Distanz, die die Ähnlichkeit zwischen zwei Zeichensequenzen als minimale Summe von Edit-Operationen berechnet die benötigt werden, um eine Zeichensequenz in eine andere Zeichensequenz umzuwandeln, beschreibt die Edit-Distanz für Sequenzen aus Bewegungsprofilen die Ähnlichkeit zwischen zwei Szenarien als minimale Summe von Edit-Operationen die nötig sind, um eine Sequenz in eine andere Sequenz zu überführen.

Die Edit-Distanz berechnet die Ähnlichkeit und damit auch ein Ähnlichkeitsmaß zwischen den beiden Sequenzen S1 und S2 aus entsprechend zwei Verkehrsszenarien. Mit S1,*i* wird Zustand *i* aus Sequenz *S*1 und mit *S*2*,j* wird der Zustand *j* aus Sequenz *S*2 indiziert. Es wird folgende Differenzengleichung für die Edit-Distanz definiert:
*D*(*i,j*)=*min-*{*D*(*i-*1*,j*)+*d*(*S*1*,i-*1*,S*1*,i*)+ λLöschung*D*(*i,j*-1)+d(*S*2,*j*-1,*s*2,*j*)+ λ Einfügung*D*(*i*-1,*j*-1)+*d*(*S*1,i-1,*S*2,*j*-1) Ersetzung.

*D*(*i,j*) ist ein Element der Tabelle, in der die Zwischenergebnisse der Berechnung der die Kosten der Edit-Operationen zwischen den beiden Zuständen *i* und *j* der beiden Sequenzen gespeichert werden. Der Parameter λ erzeugt die Kosten, die durch das Durchführen einer Löschungs- oder Einsetzungsoperation entstehen und ist als ein konstanter Wert festgelegt. λ kann dabei als ein Bestrafungsparameter betrachtet werden, der die Verwendung von Löschungs- oder Einsetzungsoperationen limitieren soll. Für die Berechnung der Kosten zwischen zwei Zuständen der beiden Sequenzen ist die Funktion:
*d*(*Si,S'j*) = *wMa∗dMa*(*Si,S'j*) *+wGe∗dGe*(*Si,S'j*) + *wDi∗dDi*(*Si,S'j*) *+wPo∗dPo*(*Si,S'j*) definiert worden. Die Funktion ist eine gewichtete Summe aus den Kosten, die zwischen den einzelnen Klassen der beiden zu vergleichenden Zuständen *S*1*,i* und *S*2*,j* erzeugt werden. Jede der Funktionen *dMa*(*Si,S'j*)*, dGe*(*Si,S'j*), *dDi*(*Si,S'j*) und *dPo*(*Si,S'j*) ist so definiert worden, dass die maximalen Kosten, die zwischen zwei Klassen eines Bewegungselements entstehen auf 1 normiert sind. Die maximalen Kosten werden verwendet, wenn sich die Klassen des Bewegungselements unterscheiden. Z.B. ergeben sich bei der Berechnung der Kosten zwischen zwei Zuständen des Bewegungselements "laterale Bewegung" *dMa*(*S*1*,i,S*2*,j*) die maximalen Kosten, wenn die Klasse der lateralen Bewegung aus Zustand *S*1,*i* "Spurwechsel Links" ist und die Klasse der lateralen Bewegung aus Zustand *S*2*,j* "Spurhaltung" ist. Wenn die Klassen der lateralen Bewegung beider Zustände gleich sind, werden die Kosten durch Kostenfunktionen festgelegt. Diese basieren auf Merkmalen der jeweiligen Klassen. Z.B. bei den Klassen "Spurwechsel Links bzw. Rechts" der lateralen Bewegung ist dieses Merkmal die Dauer des Spurwechsels.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Figur 1: zeigt eine schematische Darstellung zur erfindungsgemäßen Unterscheidung von Szenarios,
- Figur 2: zeigt eine schematische Darstellung zur erfindungsgemäßen Unterscheidung von Szenarien,
- Figur 3: zeigt eine schematische Darstellung zur erfindungsgemäßen Beschreibung des Bewegungselements laterale Bewegung
- Figur 4: zeigt eine schematische Darstellung zur erfindungsgemäßen Beschreibung des Bewegungselements longitudinale Bewegung
- Figur 5: zeigt eine schematische Darstellung zur erfindungsgemäßen Beschreibung des Bewegungselements Distanzparameter
- Figur 6: zeigt eine schematische Darstellung zur erfindungsgemäßen Beschreibung des Bewegungselements Positionsparameter
- Figur 7: zeigt den Ablauf des erfindungsgemäßen Verfahrens
- Figur 8: zeigt eine schematische Darstellung der erfindungsgemäßen Segmentierung und Sequenzbildung

### Ausführliche Beschreibung der Ausführungsformen

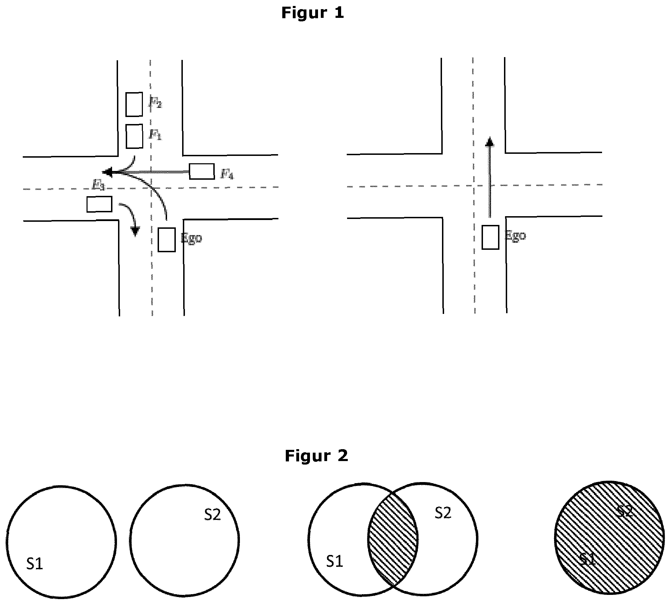

Figur 1 zeigt eine schematische Darstellung von der erfindungsgemäßen Unterscheidung von Verkehrsszenarien (Si bis Sₙ). In Figur 1 ist dazu beispielhaft ein Kreuzungsszenario dargestellt mit abweichender Anzahl an Fellow-Fahrzeugen (F₁-Fₙ). Im ersten Szenario S₁ in Figur 1 wird ein Linksabbiege-Manöver des Ego-Fahrzeug (Ego) gezeigt, mit 4 Fellow-Fahrzeugen (F₁-F₄), die ebenfalls den Kreuzungsbereich durchfahren. Im zweiten Szenario S₂ in Figur 1 durchfährt das Ego-Fahrzeug (Ego) gradlinig den Kreuzungsbereich ohne Einwirkung von Fellow-Fahrzeugen. Trotz gleichbleibender Straßenarchitektur, Randbebauung und Kurven, unterscheiden die vorliegenden Szenarien S₁ und S₂ sich deutlich, auch in Bezug zu Bewegungselementen der Verkehrsteilnehmern. Während in S₁ verschiedene laterale Bewegungselemente, die das Abbiegemanöver beschreiben enthalten sind, ist in S₂ überwiegend das laterale Bewegungselement "Spurhaltung" relevant. Ebenfalls longitudinale Bewegungselemente sind in den Verkehrsszenarien S₁ und S₂ verschieden. S₁ bedingt eine Bremsung, um das Abbiegemanöver sicher durchführen zu können. In S₂ ist eine konstante Geschwindigkeit zu erwarten. Darüber hinaus können in S₂ keine Distanz- und Positionsparameter erhoben werden, da in diesem Szenario keine Fellow-Fahrzeuge enthalten sind.

Damit werden abweichende Sequenzen für z.B. die Ego-Fahrzeuge (Ego) aus S₁ und S₂ erzeugt, so dass bei einem Vergleich der Sequenzen keine Ähnlichkeit festgestellt werden kann.

Figur 2 zeigt eine weitere schematische Darstellung zur erfindungsgemäßen Unterscheidung von Szenarien (Si bis Sₙ). Es können gemäß der Figur 2 die Szenarien S₁ und S₂ vollständig abweichend sein bezogen auf der Ausprägung der Bewegungselementen, überlappende Bewegungselemente aufweisen oder auch bezogen auf Bewegungselementen gleich sein.

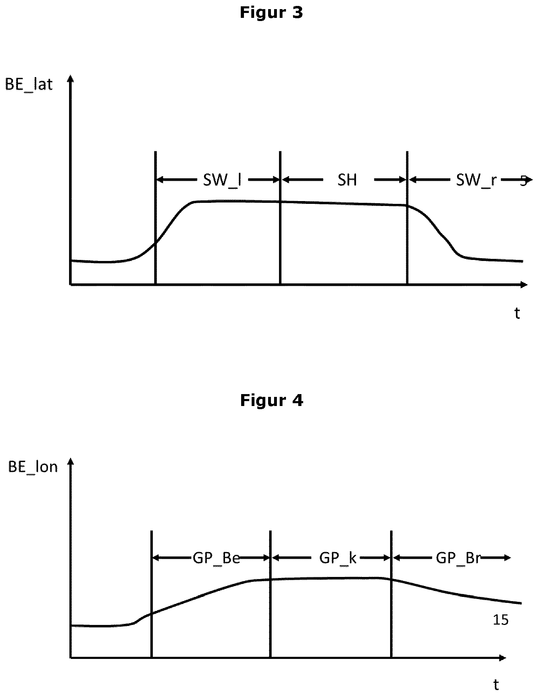

Figur 3 verdeutlicht das Bewegungselement (BE) der lateralen Bewegung (BE_lat) über einen zeitlichen Verlauf (t) z.B. für ein Ego-Fahrzeug (Ego). Es ist in Figur 3 ein zeitlicher Verlauf (t) gezeigt, welcher verschiedene Wechsel zwischen der Ausprägung der lateralen Bewegung (BE_lat) darstellt. Es ist zunächst ein Spurwechsel nach links (SW_I) angezeigt. Darauffolgend ist eine Spurhaltung (SH) in Figur 3 dargestellt. Abschließend wird ein Spurwechsel nach rechts (SW_r) gezeigt. Daraus ergeben sich drei Segmente für das Bewegungselement laterale Bewegung (BE_lat): Spurwechsel nach links (SW_I), Spurhaltung (SH) und Spurwechsel nach rechts (SW_r). Der Verlauf der Segmente fließt in das Bewegungsprofil eines Verkehrsteilnehmers ein. Darüber hinaus sind erfindungsgemäß natürlich weitere laterale Bergungselemente möglich.

In der Figur 4 werden longitudinale Bewegungen (BE_Ion) eines Verkehrsteilnehmers, z.B. eines Ego-Fahrzeuges (Ego) gezeigt. Das Bewegungselement der longitudinalen Bewegung (BE_Ion) wird unter anderem durch Geschwindigkeitsparameter (GP) beeinflusst. Die Figur 4 stellt dazu einen zeitlichen Verlauf (t) von Geschwindigkeitsparametern (GP) dar. Dazu werden die Geschwindigkeitsparameter (GP) in Segmenten erfasst. Das erste Segment stellt den Geschwindigkeitsparameter Beschleunigung (GP_Be) dar. Im zweiten Segment wie in Figur 4 gezeigt, hält das Ego-Fahrzeug eine gleichbleibende Geschwindigkeit, so dass der Geschwindigkeitsparameter eine konstante Geschwindigkeit (GP_k) anzeigt. Das letzte Segment in der Figur 4 verdeutlicht eine Abbremsung des Ego-Fahrzeugs, wodurch der Geschwindigkeitsparameter Bremsung (GP_Br) dargestellt ist. Auch diese Segmente fließen in das Bewegungsprofils des Verkehrsteilnehmers ein.

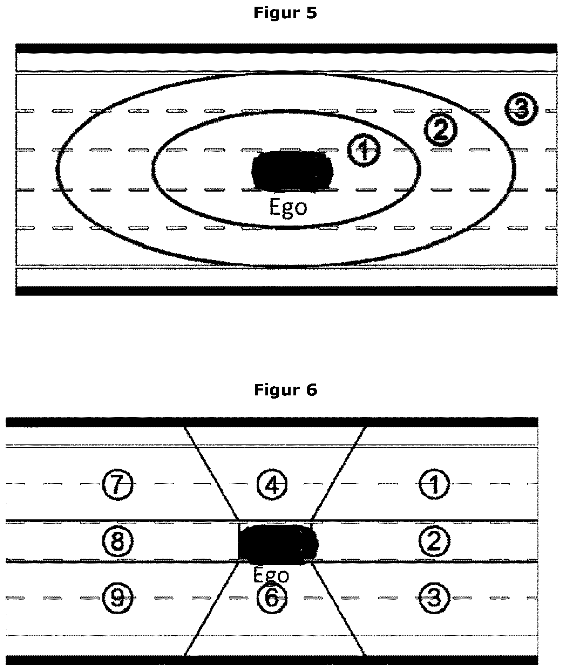

Figur 5 zeigt eine erfindungsgemäße vorteilhafte Ausprägungsform der Klassifizierung der Distanzparameter. Der Distanzparameter wird dabei immer ausgehend vom Ego-Fahrzeug (Ego) bestimmt und gibt eine Distanz zu Fellow-Fahrzeugen an. In Figur 5 ist das Ego-Fahrzeug (Ego) zentral in der Mitte dargestellt. Die erfindungsgemäßen Distanzbereiche werden so gewählt, dass sich in Klasse 1 (1) die Fellow-Fahrzeuge befinden, die in der direkten Umgebung des Ego-Fahrzeugs (Ego) sind. Der Bereich umfasst Fellow-Fahrzeuge, die sich maximal eine Spur neben dem Ego-Fahrzeug (Ego) befinden und nur in einem geringen Abstand dem Ego-Fahrzeug (Ego) voraus- oder hinterherfahren. In Klasse 2 (2) befinden sich Fellow-Fahrzeuge, die sich maximal zwei Spuren neben dem Ego-Fahrzeug (Ego) befinden und in einer mittleren Entfernung vor oder hinter dem Ego-Fahrzeug (Ego) fahren. In der dritten Klasse (3) befinden sich alle Fellow-Fahrzeuge, die außerhalb der Grenzen von Klasse 2 (2) sind.

In Figur 6 wird eine vorteilhafte Ausführungsform zur Klassifizierung des Positionsparameters gezeigt. Vergleichbar zum Distanzparameter wird in dieser Ausführungsform der Positionsparameter ausgehend vom Ego-Fahrzeug definiert. Weitere Ausführungsformen werden durch die Erfindung umfasst.

In Figur 6 ist das Ego-Fahrzeug (Ego) zentral dargestellt. Die Positionsklassen (1-8) sind so gewählt, dass ein Fellow-Fahrzeug, das sich direkt hinter oder vor dem Ego-Fahrzeug (Ego) befindet in Klasse 8 bzw. Klasse 2 eingeteilt wird. Wenn sich das Fellow-Fahrzeug links bzw. rechts von dem Ego-Fahrzeug (Ego) befindet, dann wird es der Klasse 4 bzw. 6 zugeordnet. Die restlichen vier Klassen sind für die Bereiche vorne und hinten links bzw. rechts des Ego-Fahrzeugs (Ego).

Da sowohl Positions- als auch Distanzparameter eine Relation zwischen Ego-Fahrzeug (Ego) und Fellow-Fahrzeugen (F₁-Fₙ) angeben, können bei einem Verkehrsszenario ohne Fellow-Fahrzeugen keine Angaben zu den Parametern gemacht werden.

Die Entwicklung des Positions- als auch Distanzparameter über die Zeit könne auch in Segmenten dargestellt werden. Diese Parameter fließen dann ggf. auch in das Bewegungsprofil des Verkehrsteilnehmers ein.

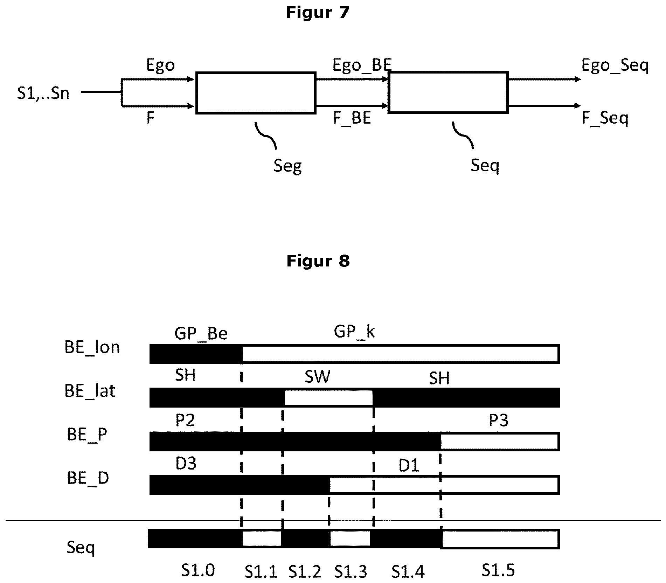

Figur 7 zeigt einen Ablauf des erfindungsgemäßen Verfahrens. Dazu wird zunächst für jedes zu betrachtende Szenario (Si bis Sₙ) die Bewegungselemente (BE) für alle Fellow-Fahrzeuge (F) wie auch für das Ego-Fahrzeug (Ego) segmentiert. Dazu wird für jedes Bewegungselement Änderungen der Ausprägung identifiziert und festgehalten. Die Segmentierung der Bewegungselemente (Ego_BE, F_BE) erfolgt in einer erfindungsgemäßen Ausgestaltung basierend auf der Geschwindigkeit des Fahrzeugs (longitudinale Bewegung), des durchgeführten Manövers (laterale Bewegung), der relativen Distanz der Fellow-Fahrzeuge (F) zum Ego-Fahrzeug (Ego) und der relativen Position der Fellow-Fahrzeuge (F) zum Ego-Fahrzeug (Ego). Ein neues Segment wird immer dann erzeugt, wenn eine Änderung in zumindest einem der Bewegungselemente festgestellt wird, so dass über den zeitlichen Verlauf eine Folge von Segmenten entsteht.

Basierend auf den Segmenten werden dann für jedes Fahrzeug Sequenzen (Seq) der Bewegungselementen erstellt. Dazu werden Überlagerung der Folge von Segmenten der Bewegungselemente durchgeführt, wobei mit jedem neuen Segment ein neuer Sequenzabschnitt beginnt. Auf diese Weise entsteht für jedes Fellow-Fahrzeug (F) als auch für das Ego-Fahrzeug (Ego) ein sequenzbasiertes Bewegungsprofil.

Figur 8 zeigt eine schematische Darstellung der erfindungsgemäßen Segmentierung und Sequenzbildung und abschließend ein sequenzbasiertes Bewegungsprofil.

Dazu sind untereinander die Segmente der Bewegungselemente der longitudinalen Bewegung (BE_Ion), der lateralen Bewegung (BE_lat), des Positionsparameters (P) und des Distanzparameter (D) dargestellt. Nach dem Ende des ersten Segments (GP_Be) in der longitudinalen Bewegung (BE_Ion) beginnt ein neuer Sequenzabschnitt der gesamten Sequenz. Damit ist der Sequenzabschnitt S1.0 abgeschlossen und der Sequenzabschnitt S1.1 beginnt. Nach Ende des Segments SH in der lateralen Bewegung (BE_lat) endet der Sequenzabschnitt S1.1 und S1.2 beginnt. Dieses Vorgehen wird wiederholt bis alle Segmente in der gesamten Sequenz aufgegangen sind. Die daraus entstandene Sequenz (Seq) ist im letzten horizontalen Balken der Figur 8 dargestellt.

Auf Basis der Sequenzen der Verkehrsteilnehmer kann dann z.B. die Normalized Weighted Edit Distance angewendet werden, um die Ähnlichkeit zwischen Szenarien festzustellen. Die Ähnlichkeit zwischen zwei Sequenzen eines Verkehrsszenarios wird dabei als minimale Summe von Edit-Operationen berechnet, die nötig sind, um eine Sequenz eines Verkehrsszenarios in eine andere Sequenz eines anderen Verkehrsszenarios umzuwandeln, wobei Edit-Operationen zumindest Löschungs- und /oder Verschiebungs- und / oder Einsetzungsoperationen beinhaltet.

## Patentansprüche

1. Computerimplementiertes Verfahren zur Bestimmung von Ähnlichkeitswerte von Verkehrsszenarien durch Ermittlung von Bewegungsprofilen von Verkehrsteilnehmern in den Verkehrsszenarien, mit den Schritten:
- Erstellung von zumindest einem Bewegungsprofils eines Verkehrsteilnehmers mit zumindest einem der Bewegungselemente
• laterale Bewegung,
• longitudinale Bewegung,
• Positions- und / oder Distanzparameter,
wobei bei jeder Änderung des zumindest einen Bewegungselementes ein neues Segment im Bewegungsprofil beginnt;
- Erstellung einer Sequenz des zumindest einen Bewegungsprofils für das Egofahrzeug und / oder eines Fellow-Fahrzeugs des Verkehrsszenarios, wobei bei einer Änderung eines Segments für das zumindest eine verwendete Bewegungselement eine Sequenzänderung erzeugt wird;
- Ermitteln eines Ähnlichkeitsmaß anhand von Bewegungsprofilen aus zumindest zwei Verkehrsszenarien durch Vergleich der aus den Bewegungsprofilen erstellten Sequenzen;
- Bereitstellen des Ähnlichkeitsmaß.

2. Computerimplementiertes Verfahren nach Anspruch 1, **dadurch gekennzeichnet, dass** Verkehrsteilnehmer Ego-Fahrzeuge und / oder Fellow-Fahrzeuge umfasst, wobei ein Ego-Fahrzeug das Fahrzeug mit dem zu testenden System eines Szenarios und ein Fellow-Fahrzeug ein beliebig weiteres Fahrzeug des Szenarios ist.

3. Computerimplementiertes Verfahren nach Anspruch 1, **dadurch gekennzeichnet, dass** Bewegungselemente folgendes beinhaltet:
• laterale Bewegung, wobei ein laterales Bewegungselement zumindest einen Spurwechsel eines Ego- und / oder Fellow-Fahrzeugs umfasst,
• longitudinale Bewegung, wobei ein longitudinales Bewegungselement zumindest Geschwindigkeitsparameter zur Beschreibung des Bewegungsprofils in longitudinaler Richtung eines Ego- und / oder Fellow-Fahrzeugs umfasst,
• sowie Positions- und Distanzparameter, wobei Positions- und Distanzparameter zumindest die relativen Positionen und Distanzen des zumindest einen Fellow-Fahrzeugs zu dem Ego-Fahrzeug beschreibt und die Anzahl der Fellow-Fahrzeuge im Szenario wiedergibt.

4. Computerimplementiertes Verfahren nach einem der vorstehenden Ansprüche, **dadurch gekennzeichnet, dass** ein Szenario durch eine zeitliche Entwicklung von Szenenelementen innerhalb einer Folge von Szenen und / oder durchgeführten Aktionen und / oder Ereignissen, inklusive Änderungen der Bewegungselemente, beschreibbar ist.

5. Computerimplementiertes Verfahren nach einem der vorhergehenden Ansprüche, **dadurch gekennzeichnet, dass** ein Bewegungsprofil eines Verkehrsteilnehmers eine zeitliche Veränderung der Bewegungselemente umfasst, wobei das Bewegungsprofil in Segmente unterteilbar ist und zumindest ein Segment beinhaltet.

6. Computerimplementiertes Verfahren nach Anspruch 5, **dadurch gekennzeichnet, dass** ein neues Segment im Bewegungsprofil eines Verkehrsteilnehmers immer dann erzeugt wird, wenn eine Änderung in zumindest einem der Bewegungselemente festgestellt wird und für jedes verwendete Bewegungselement, aber zumindest ein Bewegungselement, eine Folge von Segmenten, aber zumindest ein Segment, entsteht.

7. Computerimplementiertes Verfahren nach einem der vorhergehenden Ansprüche, **dadurch gekennzeichnet, dass** eine Sequenz eines Bewegungsprofils eines Verkehrsteilnehmers eine Überlagerung der Folge von Segmenten der Bewegungselemente beschreibt, wobei mit jedem neuen Segment im Bewegungsprofils ein neuer Sequenzabschnitt beginnt.

8. Computerimplementiertes Verfahren nach einem der vorhergehenden Ansprüche, **dadurch gekennzeichnet, dass** das Ähnlichkeitsmaß durch Vergleich der Sequenzen mit einer Normalized Weighted Edit Distance ermittelt wird, wobei eine Ähnlichkeit zwischen zwei Sequenzen eines Verkehrsszenarios als minimale Summe von Edit-Operationen berechnet wird, die nötig sind um eine Sequenz eines Verkehrsszenarios in eine andere Sequenz eines anderen Verkehrsszenarios umzuwandeln, wobei Edit-Operationen zumindest Löschungs- und /oder Verschiebungs- und / oder Einsetzungsoperationen beinhaltet.

9. Computerimplementiertes Verfahren nach einem der vorhergehenden Ansprüche, **dadurch gekennzeichnet, dass** mit Hilfe des Ähnlichkeitsmaß eine Auswahl an zu testenden und / oder aus Rohdaten zu erzeugenden Verkehrsszenarien getroffen wird.

10. Testeinheit zur Bestimmung von Ähnlichkeitswerte von Verkehrsszenarien durch Ermittlung von Bewegungsprofilen von Verkehrsteilnehmern in den Verkehrsszenarien, mit den Schritten:
- Erstellung von zumindest einem Bewegungsprofils eines Verkehrsteilnehmers mit zumindest einem der Bewegungselemente
• laterale Bewegung,
• longitudinale Bewegung,
• Positions- und / oder Distanzparameter,
wobei bei jeder Änderung des zumindest einen Bewegungselementes ein neues Segment im Bewegungsprofil beginnt;
- Erstellung einer Sequenz des zumindest einen Bewegungsprofils für das Egofahrzeug und / oder eines Fellow-Fahrzeugs des Verkehrsszenarios, wobei bei einer Änderung eines Segments für das zumindest eine verwendete Bewegungselement eine Sequenzänderung erzeugt wird;
- Ermitteln eines Ähnlichkeitsmaß anhand von Bewegungsprofilen aus zumindest zwei Verkehrsszenarien durch Vergleich der aus den Bewegungsprofilen erstellten Sequenzen;
- Bereitstellen des Ähnlichkeitsmaß.

11. Testeinheit nach Anspruch 10, **dadurch gekennzeichnet, dass** die Testeinheit durch ein Steuergerät ausgebildet ist, für welches Szenarien für virtuelle und / oder reale Tests bestimmt wird und / oder für welches Szenarien aus Rohdaten generiert wird.

12. Computerprogramm mit Programmcode, um das Verfahren nach einem der Ansprüche 1 bis 9 durchzuführen, wenn das Computerprogramm auf einem Computer ausgeführt wird.

13. Computerlesbarer Datenträger mit Programmcode eines Computerprogramms, um das Verfahren nach einem der Ansprüche 1 bis 9 durchzuführen, wenn das Computerprogramm auf einem Computer ausgeführt wird.
